# DEMANDE DE BREVET EUROPEEN

(11) **EP 1 453 277 A2**
(43) Date de publication de la demande: **01.09.2004**
(21) Numéro de dépôt: 04290507.5
(22) Date de dépôt: 25.02.2004
(51) Int. Cl.: H04L 29/06, H04L 12/22

(54) **Procédé pour la gestion securisée des droits d'exploitation d'un fichier numerique**

(30) Priorité: 25.02.2003 FR 0302297
(71) Demandeur: Apeera Inc., Boston, Massachusetts 02110 (US)
(72) Inventeur: de Belen, Pierre, 75005 Paris (FR)
(74) Mandataire: Breese, Pierre

(57) **Abrégé**

La présente invention concerne un procédé pour la gestion des droits d'exploitation d'un fichier numérique consistant à procéder à un chiffrement du fichier numérique avant la transmission à un poste client d'un premier fichier numérique crypté et d'un second fichier numérique de description des droits d'exploitation et comportant une étape de transmission d'un fichier numérique crypté à un équipement client, caractérisé en ce qu'il comporte en outre une étape de transmission d'un fichier numérique de description des droits d'exploitation et d'un autre fichier numérique d'activation des droits, par un moyen de transmission de téléphonie mobile.

## Description

La présente invention concerne le domaine des solutions techniques de sécurisation de documents numériques et plus particulièrement de la gestion de droits sous des formes digitales.

On connaît dans l'état de la technique diverses solutions de gestion de droits numériques DRM ("Digital Rights Management") de future génération utilisant un mécanisme de livraison séparée pour le contenu et les droits. Le contenu est généralement crypté et diffusable par toutes entités et tous médias. Le seul moyen de consommer (voir, écouter, utiliser) un contenu est de posséder les droits adéquats. Les droits doivent être achetés par chaque utilisateur voulant consommer le contenu. Ceux-ci doivent être acheminés et stockés de façon sécurisée dans le terminal consommant le contenu.

L'invention concerne un procédé mettant en oeuvre la carte SIM et le protocole de communication 03.48 pour assurer respectivement :
- un stockage sécurisé
- un acheminement sécurisé des droits.

Nous proposons un système permettant de décoder de la façon la plus sécurisée possible le contenu protégé dans le terminal mobile.

Dans la suite du document :

Le *Serveur* représente la suite de programme utilisée par le gestionnaire de droits dans l'espace opérateur.

L'*Interface* représente la librairie de programme développée par le gestionnaire de droits et utilisée par d'autre société pour consommer du contenu.

Quelle que soit la norme de représentation des droits (ODRL, XRML, etc.), il est important de noter que les fichiers résultants sont de taille importante et qu'il est impossible de les stocker directement dans la carte à puce pour des raisons de place et de moyen d'acheminement. Nous proposons de stocker dans la carte à puce une information limitée sécurisant ces droits.

L'activateur des droits ne contient pas seulement les informations de cryptographies nécessaires à la lecture des droits, il contient aussi le moyen de les charger dans la mémoire du téléphone utilisant un protocole se basant sur un transporteur classique comme le GPRS (exemple : HTTP).

Pour pouvoir assurer que le contenu ne sera pas utilisé par une personne non autorisée, le système doit :
- Protéger les droits pour qu'ils ne soient pas décodés par un système extérieur utilisant la carte SIM grâce à un lecteur de carte.
- Faire en sorte que, dans le terminal mobile, seule l'application autorisée puisse décoder les droits et donc le contenu.

### 1. Authentification du terminal mobile auprès de la SIM

Pour éviter qu'un utilisateur mal intentionné utilise un lecteur de carte générique afin de demander à la SIM de décrypter les droits et ainsi lui permettre de les sauvegarder et de les utiliser à mauvais escient, nous proposons un mécanisme simple d'authentification du terminal mobile auprès de la SIM. Ce mécanisme est basé sur la signature, toutes les requêtes envoyées par le terminal mobile vers la carte doivent être accompagnés d'un 'digest' crypté avec un algorithme 3DESS utilisant une clé secrète (Ks) partagée entre le terminal mobile et la SIM.

La clé Ks peut être différente pour chaque terminal, il faut alors que le constructeur de terminal communique à l'opérateur une base de données associant la clé à l'IMEI du téléphone. La clé pourra alors être provisionnée correctement dans la SIM.

### 1.1 Terminal Mobile fermé

Un terminal fermé ne peut accueillir de nouvelles applications. Son système d'exploitation et ses applications sont installés à la fabrication et il n'y a aucun moyen de les faire évoluer ou d'en installer de nouvelles. On peut considérer le terminal mobile fermé comme un environnement de confiance.

Dans ce cas, la protection de la clé Ks est évidente car on suppose qu'il est impossible d'interagir avec l'environnement logiciel du terminal mobile et donc impossible :
- De lire le programme des applications et de déduire Ks
- D'obtenir Ks pour signer une commande.
- De créer une application ayant la même relation avec la SIM que l'application décodant le contenu.

### 1.2 Terminal Mobile ouvert

Si le terminal est ouvert et permet d'exécuter des applications, le terminal ne peut plus être considéré comme un univers de confiance.

On peut, dans un premier temps, considérer le système d'exploitation comme un environnement de confiance, il doit alors :
- Protéger la clé KS.
- N'autoriser que certaines applications à utiliser l'*Interface* grâce à son propre mécanisme de signature.

### 2. Consommation du contenu

Une fois le contenu crypté, les droits cryptés et l'activateur des droits présents dans le téléphone et la carte SIM, le contenu peut être consommé par un programme utilisant l'*Interface.* Celle-ci va :
- Retrouver les droits cryptés.
- Demander à la SIM de décrypter les droits en signant sa requête.
- Extraire la clé, permettant de décrypter le contenu, des droits.
- Transmettre le contenu décrypté au programme.

### 3. Exemple complet d'utilisation

- L'utilisateur peut obtenir le contenu crypté par n'importe quel moyen.
- L'Interface extrait du contenu le moyen (protocole et adresse) d'acheter les droits.
- L'utilisateur choisit et paie les droits.
- Le serveur envoie l'activateur des droits dans la carte SIM.
- Le terminal mobile extrait de l'activateur des droits le moyen (protocole et adresse) de charger les droits cryptés.

L'invention sera mieux comprise à la lecture de la description qui suit, se référant aux dessins annexés où :
- la figure 1 représente une vue schématique des échanges d'informations et de données numériques entre le serveur et l'équipement client,
- la figure 2 représente une vue schématique des échanges d'informations et de données numériques à l'intérieur de l'équipement client.

Le contenu (1) est constitué par un fichier numérique à un format spécifique audio, vidéo, image ou texte (MPEG, MP3,...). Le calculateur du serveur de contenu génère un fichier crypté (2) et un fichier (3) de description des droits.

Ces deux fichiers (2, 3) sont ensuite préparés pour la diffusion sous la forme d'un fichier de contenu numérique chiffré (4), un fichier numérique de description des droits (5) et un fichier d'activation des droits (6).

Les deux premiers fichiers (4, 5) sont transmis à un équipement client, par exemple un téléphone cellulaire (8) par une liaison haut débit, par exemple GPRS.

Le fichier d'activation de droits (6) est transmis par une liaison de bas débit, par exemple GSM.

Les deux premiers fichiers (4, 5) sont enregistrés dans la mémoire (9) du téléphone cellulaire.

Le fichier (6) d'activation des droits est enregistré dans la mémoire vive (10) de la carte SIM.

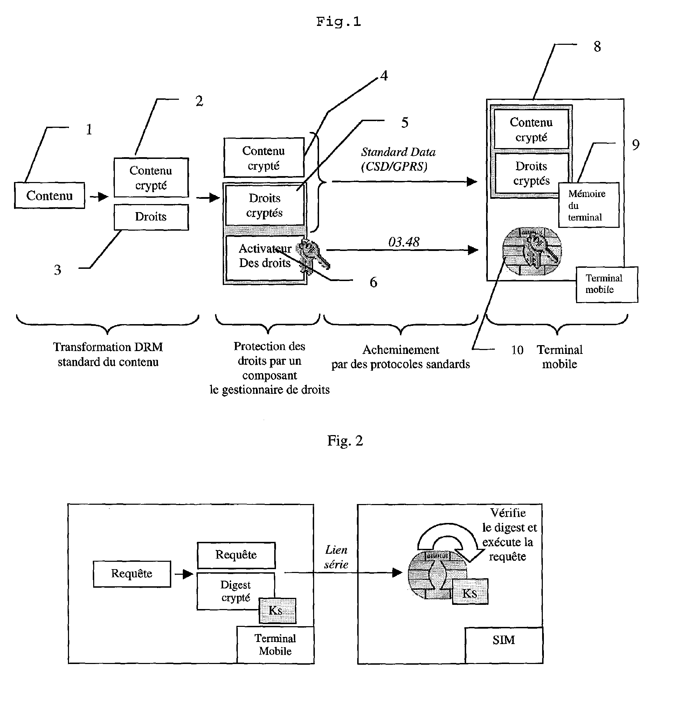

La figure 2 représente les échanges d'informations numériques entre la carte SIM et le téléphone.

Toutes les requêtes envoyées par le terminal mobile vers la carte SIM sont accompagnées d'un 'digest' crypté avec un algorithme TripleDESS utilisant une clé secrète (Ks) partagée entre le terminal mobile et la SIM.

## Revendications

1. Procédé pour la gestion des droits d'exploitation d'un fichier numérique consistant à procéder à un chiffrement du fichier numérique avant la transmission à un poste client d'un premier fichier numérique crypté et d'un second fichier numérique de description des droits d'exploitation et comportant une étape de transmission d'un fichier numérique crypté à un équipement client, **caractérisé en ce qu'**il comporte en outre une étape de transmission d'un fichier numérique de description des droits d'exploitation et d'un autre fichier numérique d'activation des droits, par un moyen de transmission de téléphonie mobile.
